# EUROPÄISCHE PATENTSCHRIFT

(11) **EP 1 487 679 B1**
(45) Veröffentlichungstag und Bekanntmachung des Hinweises auf die Patenterteilung: **30.08.2006**
(21) Anmeldenummer: 03745286.9
(22) Anmeldetag: 28.03.2003
(51) Int. Cl.: B60R 22/405, B60R 22/46

(54) **LEISTUNGSSTRAFFER**
HIGH PERFORMANCE TIGHTENER
PRE-TENTIONNEUR PERFORMANT

(30) Priorität: 28.03.2002 DE 10213906
(43) Veröffentlichungstag der Anmeldung: 22.12.2004
(60) Teilanmeldung: 05025123.0
(73) Patentinhaber: AUTOLIV DEVELOPMENT AB, 447 83 Vargarda (SE)
(72) Erfinder: LÖFFLER, Kay, 25421 Pinneberg (DE); PECH, Michael, 22459 Hamburg (DE); SCHMIDT, Martin, 25337 Elmshorn (DE); SCHMIDT, Thomas, 23669 Timmendorfer Strand (DE); SCHNEIDER, Thomas, 25813 Husum (DE); SUHR, Stefan, 25336 Elmshorn (DE); BÖSCH, Stefan, 21644 Revenahe (DE)
(74) Vertreter: Müller, Karl-Ernst
(86) Internationale Anmeldenummer: PCT/EP2003/003271
(87) Internationale Veröffentlichungsnummer: WO 2003/082640

(56) Entgegenhaltungen:
- EP-A- 0 093 233
- DE-A- 4 331 027
- DE-A- 19 528 115
- DE-A- 19 602 549
- DE-A- 19 907 962

## Beschreibung

Die Erfindung betrifft einen selbstsperrenden Gurtaufroller mit einem Gehäuse, mit einer wenigstens ein fahrzeugsensitiv und/oder gurtbandsensitiv in eine gehäuseseitige Blockierverzahnung einsteuerbares Blockiermittel aufweisenden Blockiereinrichtung für die Gurtwelle und mit einer auf die Gurtwelle einwirkenden Strammvorrichtung bestehend, aus einem über eine Antriebsvorrichtung in Drehung zu versetzenden Antriebsrad, das bei Auslösung der Strammvorrichtung mit der Gurtwelle koppelbar ist, wobei das Antriebsrad der Strammvorrichtung über die Blockiereinrichtung für die Gurtwelle kraftübertragend mit der Gurtwelle verbindbar ist und das Antriebsrad vor Auslösung der Strammvorrichtung kraftübertragend an dem Gehäuse des Gurtaufrollers dadurch festgelegt ist, dass das ringförmig ausgebildete Antriebsrad eine Blockierverzahnung zum Eingriff wenigstens einer durch Federkraft nachgiebig in Eingriff mit der Blockierverzahnung stehenden, am Gehäuse gelagerten Blockierklinke aufweist, so dass durch die bei Auslösung der Strammvorrichtung bewirkte Drehung des Antriebsrades in Gurtaufwickelrichtung das Antriebsrad von dem Gehäuse lösbar und in Gurtauszugs richtung am Gehäuse festgelegt ist.

Ein selbstsperrender Gurtaufroller mit den vorgenannten Merkmalen ist in der EP 0 093 233 beschrieben. Als Antriebsrad ist ein von einem eingeleiteten Gasstrom beaufschlagter Drehflügel vorgesehen, der mit einem am Gurtaufrollergehäuse drehbar angeordneten Ring verbunden ist. An dem Ring sind einerseits schwenkbare Riegel angeordnet, die in Eingriff mit einem mit der Gurtwelle des Gurtaufrollers fest verbundenen, außen verzahnten Klinkenrad einsteuerbar sind, so dass bei Auslösung der Strammvorrichtung der drehbare Ring über die in Eingriff mit dem Klinkenrad eingesteuerten Riegel die Gurtwelle antreibt. Gleichzeitig ist der Ring Bestandteil eines drehbar angeordneten Gehäuses, und dieses Gehäuse ist über eine in Gurtauszugsrichtung wirkende Rücklaufsperre in Form von an dem Gehäuse angreifenden Sperrklinken bei Normalbetrieb des Gurtaufrollers ohne Auslösung der Strammvorrichtung gehäusefest festgelegt. Zum beim Ansprechen des gurtbandsensitiven und/oder fahrzeugsensitiven Steuersystems herbeizuführenden Blockieren der Drehung der Gurtwelle in Gurtauszugsrichtung sind die zwischen Ring und Klinkenrad wirkenden Riegel an eine Steuerscheibe als Teil des gurtbandsensitiven/fahrzeugsensitiven Steuersystems gekoppelt, so dass bei Ansprechen des Steuersystems die am Ring gelagerten Riegel in Eingriff mit dem Klinkenrad gesteuert werden. Hierdurch ist die Gurtwelle in ihrer Drehbewegung blockiert, wobei eine auf die Gurtwelle in Gurtauszugsrichtung wirkende Last über die Gurtwelle, das Klinkenrad, die Riegel und den Ring mit Gehäuse in das tragende Gehäuse des Gurtaufrollers abgeleitet wird.

Somit ist bei dem gattungsgemäßen Gurtaufroller das Prinzip verwirklicht, dass die ohnehin vorhandene fahrzeugsensitiv und/oder gurtbandsensitiv angesteuerte Blockiereinrichtung nun in einer zusätzlichen Funktion auch für die Kupplung des Antriebrades der Strammvorrichtung an die Gurtwelle für den Strammvorgang herangezogen ist.

Der Erfindung liegt die Aufgabe zugrunde, bei einem Gurtaufroller mit den gattungsgemäßen Merkmalen das Funktionsprinzip weiter zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur unmittelbaren Kupplung des Antriebsrades mit der Gurtwelle das Antriebsrad eine zum Eingriff des an der Gurtwelle gelagerten Blockiermittels der Blockiereinrichtung eingerichtete Innenverzahnung aufweist, so dass das Antriebsrad über das Blockiermittel der Blockiereinrichtung kraftübertragend mit der Gurtwelle verbindbar ist.

Mit dieser Lösung wird dem Antriebsrad der Strammvorrichtung eine weitere Funktion als gehäusefeste Verzahnung für den Blockierfall des Gurtaufrollers bei dessen Normalbetrieb ohne Ansprechen der Strammvorrichtung zugewiesen, insoweit das Antriebsrad eine Innenverzahnung zum Eingriff der in üblicher Weise an der Gurtwelle gelagerten Sperrklinke aufweist. Hierzu ist das Antriebsrad gegenüber dem Gehäuse des Gurtaufrollers in Gurtabwickelrichtung undrehbar festgelegt, so dass durch den Eingriff der an der Gurtwelle gelagerten Blockiermittel in die Innenverzahnung des Antriebrades die von der Gurtwelle ausgehenden Blockierkräfte über die Blockiermittel und das Antriebsrad in das Gurtaufrollergehäuse eingeleitet werden. Hierzu weist zusätzlich zur Innenverzahnung das Antriebsrad eine Außenverzahnung zum Eingriff einer gehäusefest gelagerten zusätzlichen Blockierklinke auf. Gleichzeitig ist das Antriebsrad in Gurtaufwickelrichtung drehbar angeordnet, so dass bei Ansprechen der Strammvorrichtung über die Drehung des Antriebrades in Gurtaufwickelrichtung über die eingesteuerten Blockiermittel auch die Gurtwelle in Gurtaufwickelrichtung gedreht wird.

Hierzu ist nach einem Ausführungsbeispiel der Erfindung vorgesehen, dass die Blockierverzahnung des Antriebsrades und die Blockierklinke derart zueinander ausgerichtet sind, dass eine Drehung des Antriebsrades in Gurtabwickelrichtung stets blockiert und eine Drehung des Antriebsrades in Gurtaufwickelrichtung durch Überratschen der Blockierklinke über die Blockierverzahnung des Antriebsrades ermöglicht ist.

Nach einem ersten Ausführungsbeispiel der Erfindung ist vorgesehen, dass die Blockierklinke seitlich neben dem U-Schenkel des Gehäuses angeordnet und an dem U-Schenkel unter Vorspannung durch eine Drehfeder schwenkbar gelagert ist.

In einer zweckmäßigen Ausführungsform der Erfindung kann jedoch alternativ vorgesehen sein, dass die Blockierklinke in der Ebene des U-Schenkels in einer an diesem angeordneten Ausparung angeordnet und in der Aussparung schwenkbar gelagert ist, wobei zwischen der Blockierklinke und dem Rand der Aussparung eine Blattfeder angeordnet ist. Hiermit ist eine besonders platzsparende Bauweise des erfindungsgemäßen Gurtaufrollers verbunden.

Zur gleichmäßigen Lastverteilung können auf dem Umfang des Antriebsrades mehrere Blockierklinken an dem Gehäuse des Gurtaufrollers gelagert sein. Hierbei kann in einer Abwandlung vorgesehen sein, daß die Blockierklinken an dem Antriebsrad angeordnet sind und eine gehäusefeste Verzahnung als Blockierverzahnung an dem Gehäuse ausgebildet ist.

Soweit an dem Antriebsrad sowohl eine Blockierverzahnung zum Festlegen des Antriebsrades an dem Gehäuseschenkel als auch die Innenverzahnung zur Ankopplung der Gurtwelle vorzusehen sind, ist nach einem ersten Ausführungsbeispiel der Erfindung vorgesehen, dass die als Außenverzahnung ausgebildete Blockierverzahnung und die Innenverzahnung des Antriebsrades in einer Ebene angeordnet sind. Soweit hiermit bereits ebenfalls eine raumsparende Anordnung der Verzahnungen verbunden ist, ergibt sich ein besonderer Herstellungsvorteil dann, wenn nach einem Ausführungsbeispiel der Erfindung die Außenverzahnung durch Ausformen der Zähne der Innenverzahnung aus dem Ringprofil des Antriebsrades gebildet ist derart, dass Außenverzahnung und Innenverzahnung eine Verzahnung mit einheitlichen Zähnen bilden.

In einer alternativen Ausführungsform kann vorgesehen sein, dass die als Innenverzahnung ausgebildete Blockierverzahnung und die zugehörige Innenverzahnung des Antriebsrades axial nebeneinander an der Innenseite des Ringprofils des Antriebsrades angeordnet sind, wobei die gehäusefest gelagerte Blockierklinke zum Eingriff mit der Innen-Blockierverzahnung U-förmig ausgebildet ist und somit von außen her in das Antriebsrad eingreift.

Nach einem Ausführungsbeispiel der Erfindung ist auch ein anderes Konstruktionsprinzip zur Festlegung des Antriebsrades vorgesehen, bei welchem das Antriebsrad vor dem Ansprechen der Strammvorrichtung und nach dem Ansprechen der Strammvorrichtung auf unterschiedliche Weise derart festgelegt ist, dass es als quasi gehäusefeste Blockierverzahnung für die Gurtwellenblockierung wirken kann. Hierzu ist nach einem Ausführungsbeispiel der Erfindung vorgesehen, dass das Antriebsrad an dem Gehäuse über unter Last zerstörbare Blockiermittel festgelegt und die Antriebsvorrichtung der Strammvorrichtung derart ausgebildet ist, dass nach Abschluss der Antriebsbewegung eine Rückbewegung der Antriebsvorrichtung in Gurtauszugsrichtung ausgeschlossen ist derart, dass über die blockierte Antriebsvorrichtung das Antriebsrad undrehbar festgelegt ist und als Blockierverzahnung wirkt.

Während das beispielsweise über entsprechend ausgelegte Scherstifte vor Auslösung der Strammvorrichtung festgelegte Antriebsrad als Widerlager für den Eingriff der am Profilkopf der Welle angeordneten Sperrklinken bei Normalbetrieb des Gurtaufrollers wirkt, ist nach Abschluss der Strammbewegung durch geeignete und im Stand der Technik an sich bekannte Maßnahmen das Antriebsrad gegen eine Rückdrehung in Gurtauszugsrichtung über die Blockierung der Antriebsvorrichtung selbst derart festgelegt, dass das Antriebsrad die von der Gurtwelle in Gurtauszugsrichtung ausgehenden Blockierkräfte aufnehmen kann.

Soweit beispielsweise, wie zu den Ausführungsbeispielen der Erfindung noch beschrieben, die Antriebsvorrichtung der Strammvorrichtung als aus der DE 196 02 549 A1 bekannter Kugelstraffer ausgebildet ist, kann zur Festlegung des Antriebsrades nach Abschluss der Strammbewegung eine Blockierung der Kugeln bzw. der Antriebskörper in dem Antriebskanal über geeignete Kugelklemmungen vorgesehen sein. Soweit die Antriebsvorrichtung beispielsweise als Seilstraffer ausgebildet ist, stehen Maßnahmen zur Festlegung des Antriebsseils mittels geeigneter Seilklemmen oder Rücklaufsperren zur Verfügung.

Es kann jedoch auch die Antriebsvorrichtung selbst zur Festlegung des Antriebsrades auch vor Auslösung der Strammvorrichtung anstelle der erwähnten Scherstifte herangezogen werden, indem beispielsweise die Kugeln bzw. Antriebskörper an dem Antriebsrad in einer blockierenden Weise festgelegt sind derart, dass bei Beaufschlagung der Antriebsvorrichtung in Strammrichtung eine Drehung des Antriebsrades möglich ist, in der Gegenrichtung also in Gurtauszugsrichtung jedoch nicht.

Nach einem Ausführungsbeispiel der Erfindung ist vorgesehen, daß das Antriebsrad mit seiner Außenverzahnung auf der Außenseite eines Gehäuseschenkels des U-förmigen Gehäuses des Gurtaufrollers angeordnet und die Blockierklinke auf der Außenseite des Gehäuseschenkels gelagert ist.

Alternativ kann vorgesehen sein, daß das Antriebsrad mit seinem mit der außerhalb des U-förmigen Gehäuses des Gurtaufrollers angeordneten Antriebsvorrichtung zusammenwirkenden Bereich auf der Außenseite des Gehäuseschenkels angeordnet ist und mit einem die Außenverzahnung tragenden Flansch den Gehäuseschenkel in einer Lageröffnung durchgreift, wobei die Blockierklinke auf der Innenseite des Gehäuseschenkels gelagert ist. Hierbei bildet in zweckmäßiger Weise der den Gehäuseschenkel durchgreifende Fortsatz des Antriebsrades das Drehlager für die Drehung des Antriebsrades.

Die Erfindung umfasst aber auch jegliche andere räumliche Zuordnung der für die Funktion wesentlichen Konstruktionselemente.

Die Erfindung ist insbesondere auch anwendbar auf eine Bauart von Gurtaufrollern mit einer als Torsionsstab ausgebildeten Kraftbegrenzungseinrichtung, wie diese beispielsweise aus der DE 43 31 027 A1 bekannt ist. Auch bei dieser Gurtaufroller-Gurtstrammer-Kombination sind die fahrzeugsensitiv und/oder gurtbandsensitiv gesteuerte Blockiereinrichtung für die Gurtwelle und die Kupplung zwischen der Gurtwelle und dem Antriebsrad der Strammvorrichtung auf unterschiedlichen Seiten des Gurtaufrollergehäuses angeordnet. Bei derartigen, mit einem Torsionsstab versehenen Gurtaufroller-Gurtstrammer-Kombinationen tritt als zusätzliches Problem auf, daß nach dem Abschluß der in Gurtaufwickelrichtung wirksamen Strammbewegung zur Ausführung der Kraftbegrenzung eine Drehung der Gurtwelle in Gurtabwickelrichtung erforderlich ist, die durch den Antrieb der Strammvorrichtung erschwert oder begrenzt, gegebenenfalls sogar blockiert sein kann. Hierzu schlägt die DE 43 31 027 A1 zusätzlich eine aufwendige Einrichtung zur Abkupplung des Antriebsrades von der Gurtwelle nach Beendigung der Strammbewegung vor. Mit der Anwendung des Grundgedankens der Erfindung auf derartige Gurtaufroller-Gurtstrammer-Kombinationen mit Kraftbegrenzung ist der zusätzliche Vorteil verbunden, daß die Kraftbegrenzung nach Abschluß der Strammbewegung nicht behindert ist.

Soweit die Erfindung in einem Ausführungsbeispiel dazu vorsieht, daß der Torsionsstab einen das Blockiermittel tragenden und von der Trägheitsmasse umgriffenen Profilkopf aufweist, kann in zweckmäßiger Weise nach einem Ausführungsbeispiel der Erfindung der Profilkopf mit der Gurtwelle über Scherstifte verbunden sein, wie dies grundsätzlich aus der DE 195 28 115 A1 bekannt ist. Hiermit wird die Bewegung der Gurtwelle sowohl beim normalen Auf- und Abwickeln des Gurtbandes wie auch beim Ansprechen der Strammvorrichtung unter Überbrückung des Torsionsstabes unmittelbar auf den Profilkopf übertragen. Nach Abschluß einer Strammbewegung kommt es bei entsprechender Auszugsbelastung an der Gurtwelle bei einem Unfallgeschehen zu einem Abbrechen der Scherstifte, so daß sich die Welle nunmehr über Verdrillung des Torsionsstabes gegenüber dem blockierten Profilkopf weiter drehen kann. Hieraus ergibt sich der Vorteil, daß während des Kraftbegrenzungsvorganges keine Verbindung zwischen der Gurtwelle und der Strammvorrichtung mehr besteht, so daß insoweit auch die im Stand der Technik vorhandenen Behinderungen der Kraftbegrenzungsbewegung der Gurtwelle nicht auftreten.

In der Zeichnung sind Ausführungsbeispiele der Erfindung wiedergegeben, welches nachstehend beschrieben sind. Es zeigen:
- Fig. 1: einen Gurtaufroller mit Strammvorrichtung in einer Gesamtansicht mit teils auseinandergezogenenen Baugruppen,
- Fig. 2: die Blockierseite des Gurtaufrollers mit integriertem Antriebsrad in einer auseinandergezogenen Darstellung,
- Fig. 3: den Gegenstand der Figur 2 aus einer anderen Blickrichtung,
- Fig. 4: das straffersensitive Steuersystem für die Ankopplung der Gurtwelle an das Antriebsrad in einer Einzeldarstellung.
- Fig. 5: einen Gehäuseschenkel des Gurtaufrollergehäuses mit Blockierklinken zur Festlegung des Antriebsrades,
- Fig. 6: eine Anordnung zur Ankopplung der Sperrklinken des Profilkopfes an das Antriebsrad in einer schematischen Darstellung,
- Fig. 7: die Anordnung gemäß Figur 6 mit einer gesonderten, pyrotechnischen Antriebseinheit,
- Fig. 8: die Anordnung gemäß Figur 6, bei der die pyrotechnische Antriebsvorrichtung der Strammvorrichtung den Antriebsimpuls für die Betätigung der Kupplungsklinke liefert;
- Fig. 9: eine andere Ausführungsform der Ankopplung der Sperrklinke des Profilkopfes an das Antriebsrad,
- Fig. 10: den Gegenstand der Figur 9 in einer geschnittenen Seitenansicht,
- Fig. 11: das Steuerungssystem für die Ankopplung der Gurtwelle an das Antriebsrad gemäß Figuren 1 bis 3 in einer anderen Ausführungsform,
- Fig. 12: die Festlegung des Antriebsrades an einem Gehäuseschenkel in einer anderen Ausführungsform in einer schematischen Darstellung,
- Fig. 13: die Festlegung des Antriebsrades an einem Gehäuseschenkel in einer weiteren Ausführungsform in einer schematischen Darstellung,
- Fig. 14a-1: in unterschiedlichen Ausführungsformen jeweils die Zuordnung von Gehäuse, Gurtwelle, Antriebsrad sowie Blockier- und Steuerelementen zueinander in einer schematischen Darstellung.

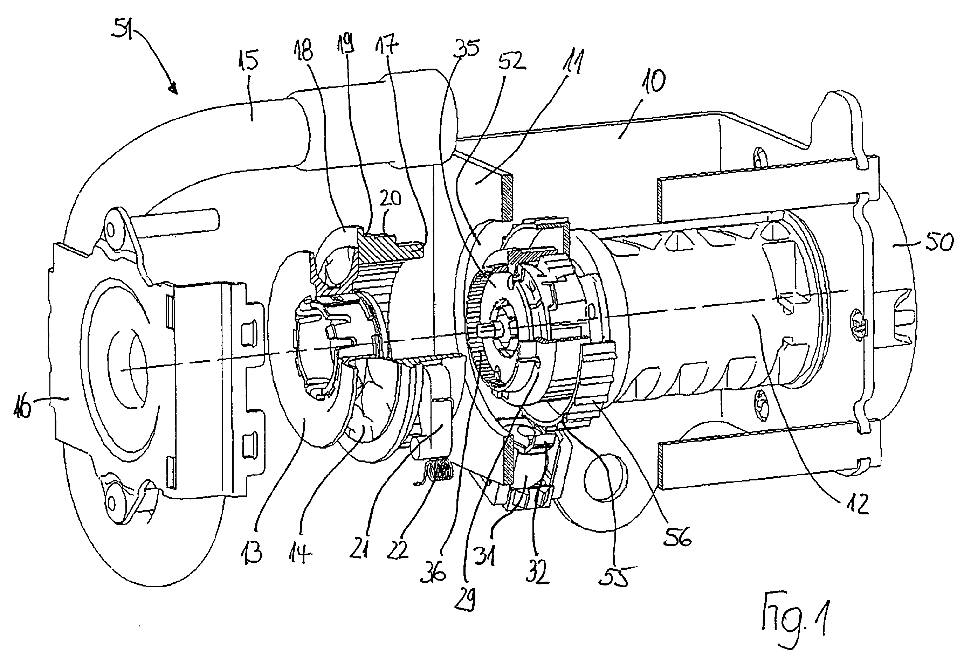

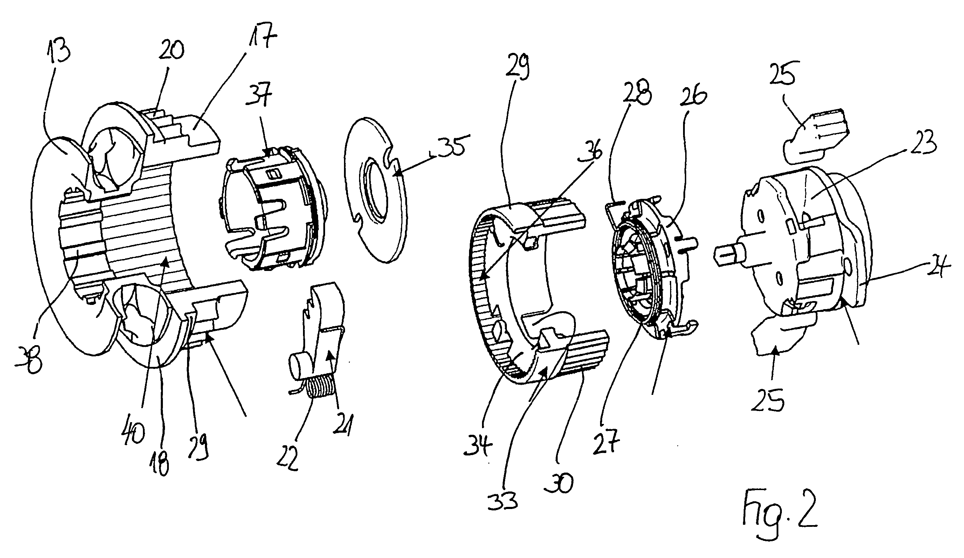

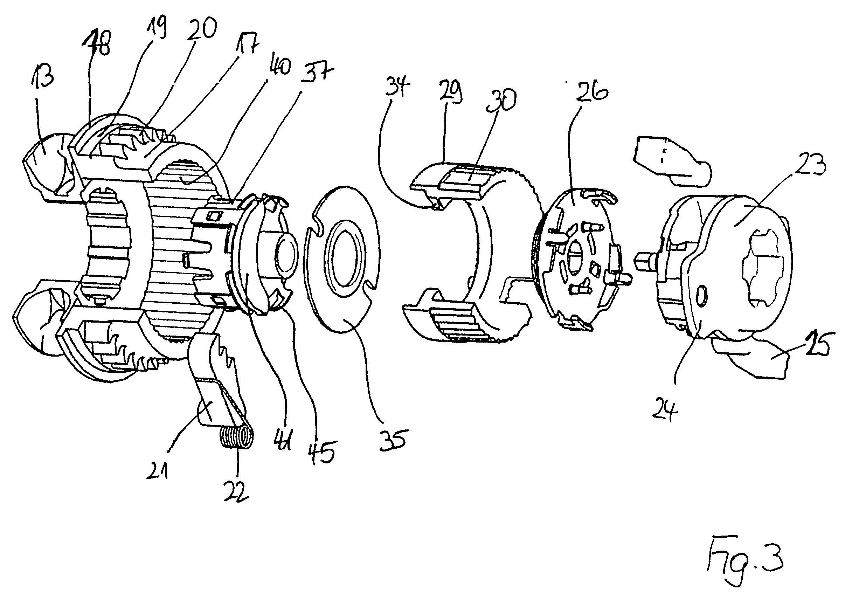

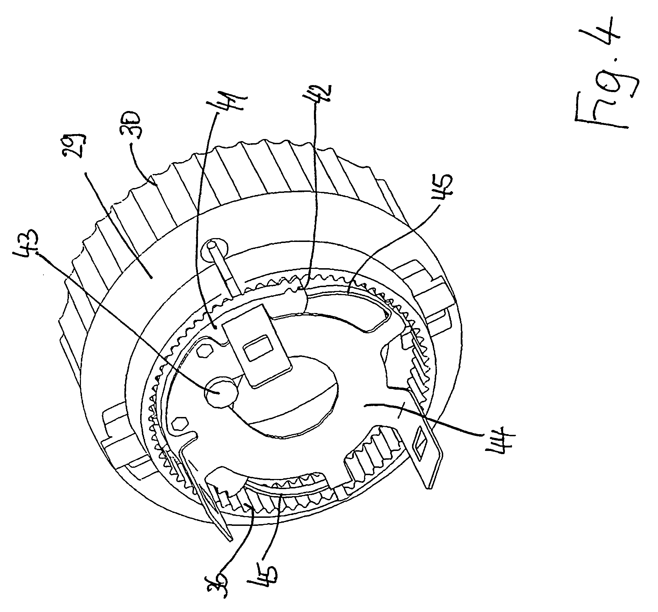

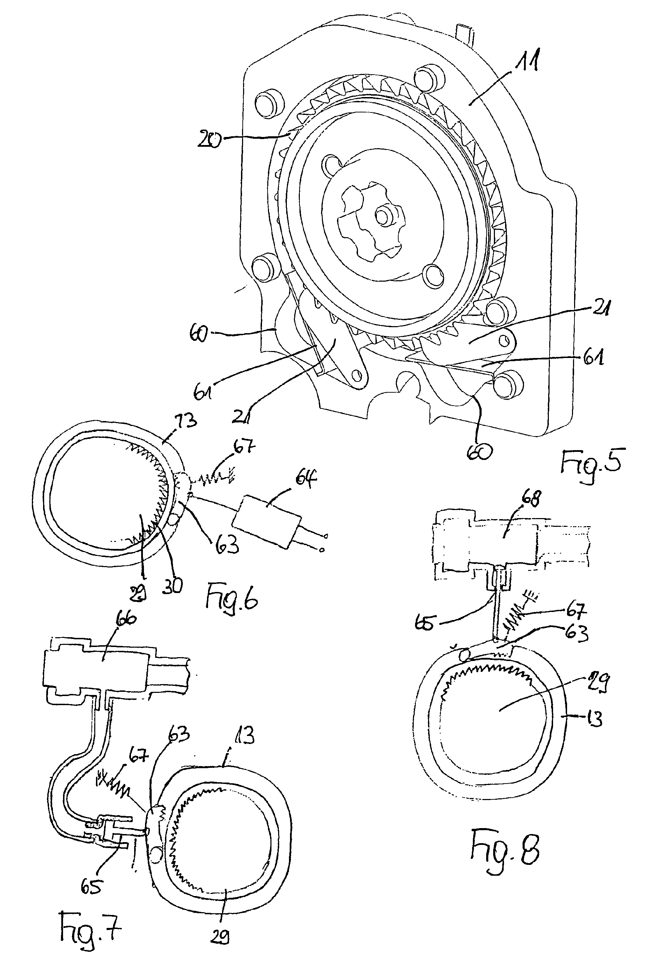

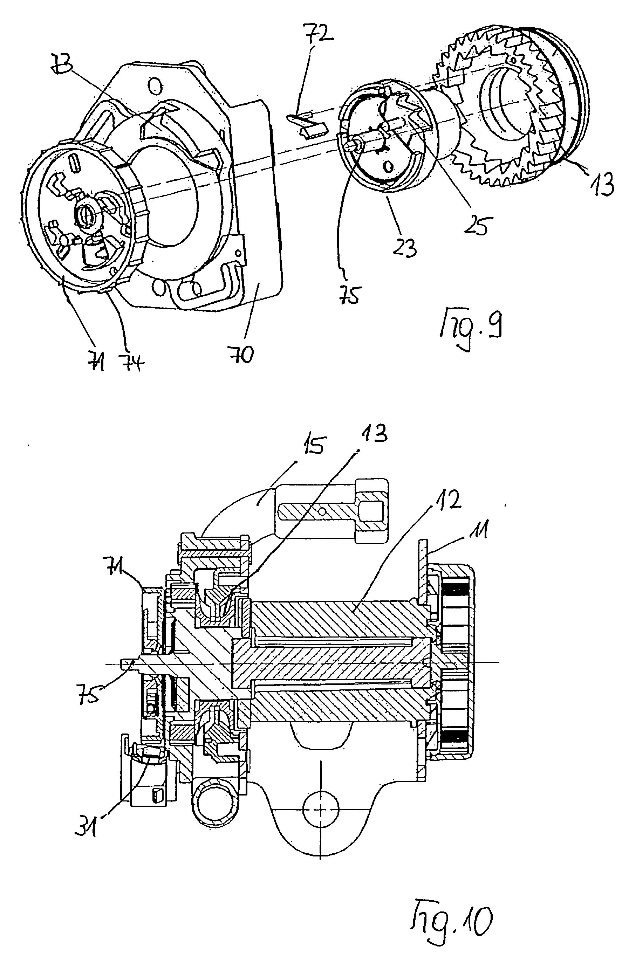

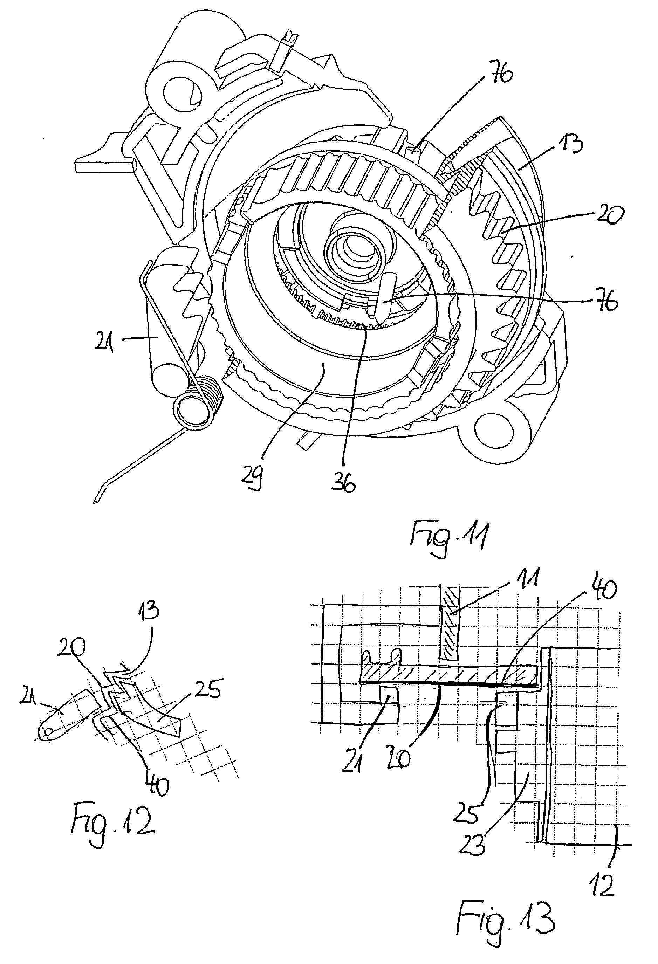

Der in Figur 1 insgesamt dargestellte Gurtaufroller hat ein U-förmiges Gehäuse 10, in dessen seitlichen U-Schenkeln eine Gurtwelle 12 drehbar gelagert ist; auf der Gurtwelle 12 ist das nicht dargestellte Gurtband des Sicherheitsgurtaufrollers aufgewickelt.

Während auf der einen Seite der Gurtwelle 12 unter einer Gehäusekappe 50 eine Aufwickelfeder angeordnet ist, ist auf der anderen Seite der Gurtwelle 12 ein Antriebsrad 13 einer Strammvorrichtung angeordnet, dem eine Antriebsvorrichtung 51 zugeordnet ist, um im Auslösefall der Strammvorrichtung das Antriebsrad 13 in Drehung zu versetzen. Die Antriebsvorrichtung 51 ist bei dem dargestellten Ausführungsbeispiel als Kugelstraffer entsprechend der DE 196 02 549 A1 ausgebildet; soweit die Antriebsvorrichtung in ihrer Ausgestaltung nicht zum Gegenstand der Erfindung zählt, wird zur Erläuterung auf die vorgenannte Druckschrift verwiesen. Auch sind andere Antriebsvorrichtungen, beispielsweise ein Antrieb über ein auf dem Antriebsrad aufgewickeltes Antriebsseil möglich. Im einzelnen umfaßt die Antriebsvorrichtung 51 ein über eine Befestigungskappe 16 an dem Gehäuse 10 befestigtes Rohrgehäuse 15, in welchem eine Treibladung sowie Kugeln als Massekörper angeordnet sind; im Auslösefall treiben die durch die Zündung des Gasgenerators entstehenden Gase die Kugeln aus dem Rohrgehäuse 15, so daß diese in Ausnehmungen 14 des Antriebsrades 13 eintreten und das Antriebsrad 13 somit in Drehung versetzen.

Das Antriebsrad 13 hat einen zu dem U-Schenkel 11 des Gehäuses 10 gerichteten Fortsatz 17, der in eine in dem U-Schenkel 11 des Gehäuses 10 ausgebildeten Lageröffnung 52 hineinragt. Dabei liegt ein an dem Fortsatz 17 ausgebildeter Lagerflansch 18 gegen die Außenseite des U-Schenkels 11 an, während ein anschließender Lagerkranz 19 in der Ebene der Lageröffnung 52 angeordnet ist, so daß das Antriebsrad 13 in dem U-Schenkel 11 des Gehäuses 10 drehbar gelagert ist.

An dem neben dem Lagerkranz 19 angeordneten und zur Gurtwelle 12 vorstehenden Bereich des Fortsatzes 17 ist eine Außenverzahnung als Blockierverzahnung 20 angeordnet, der eine an der Innenseite des U-Schenkels 11 schwenkbar angeordnete Blockierklinke 21 zugeordnet ist, die von einer Feder 22 in ihre Eingriffsstellung mit der Blockierverzahnung 20 vorgespannt ist. Dabei sind die Verzahnungen von Blockierklinke 21 und Blockierverzahnung 20 derart ausgebildet, daß eine Drehung des Antriebsrades 13 in Gurtabwickelrichtung stets blockiert und eine Drehung des Antriebsrades 13 in Gurtaufwickelrichtung durch Überratschen der Blockierklinke 21 über die Blockierverzahnung 20 ermöglicht ist. Zusätzlich weist das Antriebsrad 13 im Bereich seines Fortsatzes 17 eine Innenverzahnung 40 zum Eingriff von Blockiermitteln auf, so daß das am Gehäuse 10 über die Blockierklinke 21 festgelegte Antriebsrad 13 wie eine lastaufnehmende gehäuseseitige Verriegelung für das Blockiersystem des Gurtaufrollers wirkt. Die der Ankopplung des Antriebsrades 13 an die Gurtwelle 12 dienenden Bauteile sind nachfolgend gesondert erläutert.

Eine alternative Anordnung der Blockierklinken 21 an dem Gehäuseschenkel 11 des Gehäuses 10 ist in Figur 5 dargestellt; bei diesem Ausführungsbeispiel sind zwei Blockierklinken 21 in der Ebene des U-Schenkels 11 des Gehäuses 10 angeordnet, und zwar in in dem Gehäuseschenkel 11 befindlichen Aussparungen 60. Die Federbelastung der Blockierklinken 21 erfolgt durch zwischen der jeweiligen Blockierklinke 21 und dem Rand der Aussparung 60 angeordnete Blattfedern 61. Wie sich unschwer ergibt, ist hiermit eine Verringerung der Baubreite des Gurtaufrollers verbunden.

Was die Ausbildung der Verzahnungen an dem Antriebsrad zum Eingriff der Blockierklinken 21 betrifft, schlägt die Erfindung hierzu unterschiedliche Ausführungen vor. Soweit gemäß Figur 1 die Außenverzahnung 20 und die Innenverzahnung 40 in einer Ebene angeordnet sind, wird gemäß Figur 12 in zweckmäßiger Weise vorgeschlagen, diese Verzahnungen 20, 40 in einem einheitlichen Herstellungsvorgang auszubilden, indem die Außenverzahnung 20 durch das Ausprägen der Innenverzahnung 40 aus dem Ringprofil des Antriebsrades 13 gebildet wird, so daß sich eine insgesamt einheitliche Verzahnung ergibt; dies ist in Figur 12 schematisch wiedergegeben.

Eine alternative Ausführung der Verzahnung sieht eine Ausbildung der Blockierverzahnung und der notwendigen Innenverzahnung 40 als gemeinsame Innenverzahnungen 62, 40 vor, die axial nebeneinander an der Innenseite des Ringprofils des Antriebsrades 13 ausgebildet sind. In diesem Fall ist die Blockierklinke 21 U-förmig ausgebildet, so daß sie von außen bzw. von der Seite her in die Blockier-Innenverzahnung 62 eingreift.

Die Ankopplung des Antriebsrades 13 an die Gurtwelle 12 wird in einem ersten Ausführungsbeispiel anhand der Figuren 2 bis 4 erläutert. Wie zunächst den Figuren 2 und 3 zu entnehmen ist, ist ein Profilkopf 23 an der zugeordneten Stirnseite der Gurtwelle befestigt, wobei wie nicht weiter dargestellt eine feste Verbindung zwischen dem Profilkopf 23 und der Gurtwelle 12 besteht, welche unmittelbar über dem Torsionsstab gebildet sein kann, so daß sich Gurtwelle 12 und Profilkopf 23 jeweils miteinander drehen.

Soweit bei Bauformen eines Gurtaufrollers mit einer als Torsionsstab ausgebildeten Kraftbegrenzungseinrichtung, beispielsweise gemäß der DE 43 31 027 A1, der Profilkopf 23 undrehbar mit dem im Inneren der Gurtwelle 12 verlaufenden Torsionsstab verbunden und insoweit eine Relativdrehung zwischen dem Profilkopf 23 und der Gurtwelle 12 möglich ist, sind an dem Profilkopf 23 radial abstehende Ansätze 24 vorgesehen, an denen nicht dargestellte, mit der Gurtwelle 12 verbundene Scherstifte angeordnet sind, so daß vor einem Ansprechen des Torsionsstabes der Profilkopf 23 unmittelbar mit der Gurtwelle 12 verbunden ist. An dem Profilkopf sind einander gegenüberliegend zwei radial ausschwenkbare Sperrklinken als Blockiermittel 25 angeordnet, über welche in einer noch zu beschreibenden Weise die Blockierung der Gurtwelle 12 gegenüber dem Gehäuse 10 erfolgt.

Soweit die Ansteuerung der Blockierung einerseits durch ein gurtbandsensitives und andererseits durch ein fahrzeugsensitives Steuersystem eingeleitet wird, besteht das gurtbandsensitive Steuersystem aus einem mit dem Profilkopf 23, vorzugsweise durch eine formschlüssige Rastverbindung zu verbindenden Adapter 26, an dem eine die Ansprechschwelle für das gurtbandsensitive Steuersystem festlegende g-Wert-Feder als sogenannte WS-Feder 27 festgelegt ist. Das äußere, radial abstehende Federende 28 ist an der Innenseite einer ringförmig ausgebildeten und den Profilkopf 23 mit Adapter 26 umschließenden Trägheitsmasse 29 eingehängt. Damit die Sperrklinken 25 des Profilkopfes 23 radial nach außen treten können, weist die Trägheitsmasse 29 jeweils gegenüberliegende Ausnehmungen 33 für den Durchtritt der Sperrklinken 25 auf.

Auf dem äußeren Umfang der Trägheitsmasse 29 ist zusätzlich ein sich mit der Trägheitsmasse 29 jeweils drehender Ring 55 angeordnet, in dessen Außenverzahnung 56 ein an einem Fahrzeugsensor 31 angeordneter Sperrarm 32 bei Ansprechen des Fahrzeugsensors eingreift und dadurch die Trägheitsmasse 29 in ihrer Bewegung festhält. Hierdurch werden die Sperrklinken 25 in die Blockierfunktion ausgelenkt. Die Trägheitsmasse 29 ist ferner auf ihrer Außenseite mit einer Außenverzahnung 30 versehen, die eine zusätzliche Blockierung der Gurtwelle 12 ermöglicht, indem die Trägheitsmasse bei ihrer seitlichen Auslenkung in der Verzahnung 40 blockiert. Es wäre deshalb alternativ möglich, den Sperrarm 32 des Fahrzeugsensors 31 gegebenenfalls auch unmittelbar an der Außenverzahnung 30 angreifen zu lassen.

Da die Trägheitsmasse 29 nicht nur als Bestandteil des fahrzeugsensitiven und des gurtbandsensitiven Steuersystems arbeitet, sondern zusätzlich noch eine Funktion hinsichtlich der Ankopplung des Antriebsrades 13 hat, ist der Innenraum der ringförmigen Trägheitsmasse 29 durch einen Innenflansch 34 abgeteilt. Gegen den Innenflansch 34 liegt dabei eine Sicherungsscheibe 35 an, die in die ringförmige Trägheitsmasse 29 eingelegt wird und mit dem Adapter 26 verrastet, so daß die Trägheitsmasse 29 unverlierbar, aber gegenüber dem Profilkopf 23 mit Adapter 26 drehbar an dem Profilkopf 23 festgelegt ist.

In ihrem axial über die Sicherungsscheibe 35 überstehenden Bereich ist die Trägheitsmasse 29 mit einer Innenverzahnung 36 versehen. In diesen mit der Innenverzahnung 36 versehenen Teil der Trägheitsmasse 29 ragt ein an dem Antriebsrad 13 über Formschlußgestaltungen 38 festgelegter Mitnehmerteil 37 hinein, wobei an dem Mitnehmerteil 37 eine Haltefeder 44 festgelegt ist. An der Haltefeder 44 ist eine zweiarmige Kupplungsklinke 41 mit einem zentral angeordneten Lagerzapfen 43 radial ausschwenkbar gelagert, die an ihrem einen äußeren Ende eine Verzahnung 42 aufweist, die zum Eingriff in die Innenverzahnung 36 der Trägheitsmasse 29 eingerichtet ist. Die Kupplungsklinke 41 ist in ihrer von den Federarmen 45 der Haltefeder 44 festgelegten Ruhestellung derart angeordnet, daß sie freigängig gegenüber der Trägheitsmasse 29 ist. Kommt es allerdings bei Ansprechen der Strammvorrichtung zu einer Drehbeschleunigung des Antriebsrades 13 und des damit verbundenen Mitnehmerteils 37, so bleibt die Kupplungsklinke 41 aufgrund ihrer Masseträgheit hinter der Drehbewegung des Mitnehmerteils 37 zurück, wobei die Kraft der Federarme 45 überwunden wird, so daß die Kupplungsklinke 41 radial bis zum Eingriff in die Innenverzahnung 36 ausschwenkt.

Beim Normalbetrieb des Gurtaufrollers mit Auf- und Abwickelbewegungen des Gurtbandes kommt es in an sich bekannter Weise aufgrund des Ansprechens des gurtbandsensitiven oder des fahrzeugsensitiven Steuersystems zu einer Relativdrehung der Trägheitsmasse 29 gegenüber dem Profilkopf 23 und damit gegenüber der Gurtwelle 12, indem entweder bei Ansprechen des fahrzeugsensitiven Steuersystems die Trägheitsmasse 29 durch Eingriff des Sperrarms 32 des Fahrzeugsensors 31 festgelegt wird, während sich die Gurtwelle 12 weiterdreht, oder indem bei einem schnellen Gurtbandauszug die Trägheitsmasse 29 aufgrund ihrer Masseträgheit gegenüber einer schnellen Drehung des Adapters 26 mit WS-Feder 27 zurückbleibt. In beiden Fällen führt die Relativbewegung zwischen Trägheitsmasse 29 und Profilkopf 23 zu einer radialen Aussteuerung der Sperrklinken 25 durch die Ausnehmungen 33 der Trägheitsmasse 29 hindurch bis zum Eingriff in die Innenverzahnung 40 des Fortsatzes 17 des Antriebsrades 13. Da das Antriebsrad 13 aufgrund des fortwährenden Eingriffs der Blockierklinke 21 in die Blockierverzahnung 20 an dem Gehäuse 10 festgelegt ist, wird die Gurtwelle 12 an einer Drehung in Gurtabwickelrichtung gehindert, und die bei weiterem Gurtbandzug auftretende Last wird über die Sperrklinken 25 und das Antriebsrad 13 in das Gurtaufrollergehäuse 10 abgeleitet. Insofern kommt dem Antriebsrad 13 eine Doppelfunktion zu, indem es auch für die Ausbildung der Gurtblockierung herangezogen ist.

Soweit der Gurtaufroller einen Torsionsstab als Kraftbegrenzungseinrichtung aufweist, führt die bei blockiertem Profilkopf 23 auf die Gurtwelle 12 weiterhin einwirkende Auszugsbelastung zu einem Abscheren der Scherstifte vom Ansatz 24 des Profilkopfes 23, so daß sich die Gurtwelle 12 über den an ihr und an dem Profilkopf 23 eingespannten Torsionsstab in einer an sich bekannten Weise gegenüber dem blockierten Profilkopf 23 bei gleichzeitiger Kraftaufnahme durch den Torsionsstab weiterdrehen kann.

Kommt es nun zu einer Auslösung der Strammvorrichtung und damit zu einer Drehung des Antriebsrades in Gurtaufwickelrichtung, so wird zunächst die Drehung des Antriebsrades 13 in Gurtaufwickelrichtung durch die in Eingriff mit der Blockierverzahnung 20 stehende Blockierklinke 21 nicht behindert, weil die Verzahnungen von Blockierverzahnung 20 und der federbelasteten Blockierklinke 21 derart aufeinander abgestimmt sind, daß sich das Antriebsrad 13 in Gurtaufwickelrichtung durch Überratschen der Blockierklinke 21 über die Blockierverzahnung 20 drehen kann.

Die Drehung des Antriebsrades 13 führt zu einem Ansprechen der über das Mitnehmerteil 37 an dem Antriebsrad 13 gelagerten Kupplungsklinke 41, die bei entsprechender Drehbeschleunigung in Eingriff mit der Innenverzahnung 36 der Trägheitsmasse 29 gesteuert wird, so daß die Trägheitsmasse 29 an die Drehung des Antriebsrades 13 gekoppelt ist. Damit kommt es zwangsläufig zu einer Relativbewegung zwischen der sich drehenden Trägheitsmasse 29 und der sich mehr oder weniger in Ruheposition befindenden Gurtwelle 12 mit Profilkopf 23, und diese Relativbewegung führt wiederum zu einem Einsteuern der Sperrklinken 25 in die Innenverzahnung 40 des Antriebsrades 13. Hierdurch erfolgt nun eine lastübertragende, unmittelbare Kopplung zwischen dem Antriebsrad 13 und dem Profilkopf 23, so daß über die Blockiereinrichtung des Gurtaufrollers gleichzeitig die Übertragung der Strammdrehung des Antriebsrades 13 in eine Drehung der Gurtwelle 12 in Gurtaufwickelrichtung vorgenommen wird.

Alternative Ausführungsformen zur Ansteuerung einer die Ankopplung des Antriebsrades 13 an die Trägheitsmasse 29 bewirkenden und damit den Kupplungseingriff der Sperrklinken 25 des Profilkopfes 23 in die Innenverzahnung 40 des Antriebsrades 13 herbeiführenden Kupplungsklinke sind in den Figuren 6 bis 8 beschrieben.

Wie sich zunächst aus Figur 6 ergibt, ist eine Kupplungsklinke 63 an dem Antriebsrad derart drehbar gelagert, daß sie in Eingriff mit der Blockierverzahnung 30 der Trägheitsmasse 29 einschwenkbar ist. Dieses Einschwenken wird über einen schematisch dargestellten Aktuator 64 ausgeführt, der beispielsweise als Elektromagnet oder als Piezoelement ausgebildet sein kann.

Wie sich in einer anderen Ausführungsform gemäß Figur 7 ergibt, kann der Aktuator auch als an der Kupplungsklinke 63 angreifende Kolbeneinheit 65 mit einer an der Kupplungsklinke 63 angreifenden Kolbenstange ausgebildet sein. Die Kolbeneinheit 65 wird von einer gesonderten pyrotechnischen Antriebseinheit 66 angesteuert, die gemeinsam mit der Strammvorrichtung auslösbar sein kann.

Bei dem in Figur 8 dargestellten Ausführungsbeispiel ist zur Ansteuerung der die Kupplungsklinke 63 beaufschlagenden Kolbeneinheit 65 die Antriebseinheit 68 für die Strammvorrichtung herangezogen, die zu diesem Zweck mittels einer Gasdruckleitung 69 mit der Kolbeneinheit 65 verbunden ist. Bei Auslösung der Antriebseinheit 68 wird nicht nur die Antriebsvorrichtung 51 der Strammvorrichtung mit Gas beaufschlagt, vielmehr wird ein Teil des erzeugten Gases abgezweigt und über die Gasdruckleitung 69 der Kolbeneinheit 65 zugeführt, so daß die Kupplungsklinke 63 entsprechend in Eingriff mit der Trägheitsmasse 29 eingesteuert wird.

Eine weitere Ausführungsform zur Ankopplung des Antriebsrades 13 an die Trägheitsmasse 29 ergibt sich aus Figur 11, wobei hier an dem Antriebsrad 13 ein längsverschiebbarer Stift 76 derart angeordnet ist, daß der Stift 76 in den Weg der Antriebskugeln der Strammvorrichtung hineinreicht und von der ersten auftreffenden Kugel längsverschoben wird und bei dieser Längsverschiebung in Eingriff mit der Innenverzahnung 36 der Trägheitsmasse 29 gelangt und somit das Antriebsrad 13 und die Trägheitsmasse 29 aneinander koppelt.

Eine wiederum alternative Ausführungsform zur Verbindung von Antriebsrad 13 und Gurtwelle 12 ist in den Figuren 9 und 10 dargestellt, wobei bei diesem Ausführungsbeispiel keine topfförmige Trägheitsmasse vorgesehen ist. Bei diesem Ausführungsbeispiel ist an dem U-Schenkel 11 des Gehäuses 10 eine U-förmige und das Antriebsrad 13 umgreifende Gehäusekappe 70 angeordnet, auf deren Außenseite eine trägheitsgesteuerte Steuerscheibe 71 auf einem hierzu durch die. Gehäusekappe 70 hindurchgeführten Wellenfortsatz 75 gelagert ist. Die Steuerscheibe 71 weist auf ihrem äußeren Umfang ebenfalls eine Blockierverzahnung 74 auf, der ein fahrzeugsenstiver Sensor zugeordnet sein kann. An dem Antriebsrad 13 ist ein Mitnehmerhebel 72 schwenkbar gelagert, der durch eine in der Gehäusekappe 70 ausgebildete Kulissenführung 73 hindurchgeführt und zum Eingriff mit der Blockierverzahnung 74 der Steuerscheibe 71 eingerichtet ist. Die Kulissenführung 73 ist derart ausgebildet, daß bei beginnender Drehung des Antriebsrades 13 der Mitnehmerhebel 72 durch die feststehende Kulissenführung 73 in Eingriff mit der Blockierverzahnung 74 der Steuerscheibe 71 gebracht wird und die Steuerscheibe 71 dadurch in ihrer Drehbewegung mit der Drehung des Antriebsrades 13 mitnimmt. Hierdurch kommt es zu der Relativdrehung der Steuerscheibe 71 zu dem Profilkopf 23, was - wie beschrieben - zur Aussteuerung der Sperrklinken 25 führt. Am Ende dieses Aussteuerweges schlägt der Mitnehmerhebel 72 am. Ende der Kulissenführung 73 an, so daß in dieser Stellung der Mitnehmerhebel 72 abschert und somit die Kupplung des Antriebsrades 13 an die Steuerscheibe 71 wieder aufgehoben wird; diese Kupplung ist während der Übertragung der Strammbewegung nach Eingriff der Sperrklinken 25 in die Innenverzahnung 40 des Antriebsrades 13 nicht mehr erforderlich.

In den Figuren 14a - 1 sind unterschiedliche Möglichkeiten wiedergegeben, die konstruktiv notwendigen Bestandteile des Gurtaufrollers wie Gehäuse, Gurtwelle, Antriebsrad sowie Blockier- und Steuerelemente in einer unterschiedlichen Lage zueinander anzuordnen; daraus wird deutlich, daß die Erfindung auf alle denkbaren, konstruktiv bedingten Zuordnungen der Einzelteile eines Gurtaufrollers anwendbar und dadurch in ihrer Anwendung nicht beschränkt ist.

In Figur 14a ist zunächst eine schematische Darstellung einer Anordnung wiedergegeben, bei der das Strafferrad 13 mit einer Lagerstelle 80 für die Gurtwelle 12 in einem Gehäuseschenkel 11 des U-förmigen Gehäuses 10 innenseitig angeordnet ist, wobei die Außenverzahnung 20 zum Anschluß der gehäuseseitig gelagerten Blockierklinke 21 und die Innenverzahnung 40 zum Eingriff der Gurtblockierung (Profilkopf 23, Sperrklinken 25) zur Gurtwelle 12 hin gerichtet angeordnet sind.

Das in Figur 14b dargestellte Ausführungsbeispiel unterscheidet sich im wesentlichen dadurch, daß die Außenverzahnung 20 mit Blockierklinke 2.1 und die Innenverzahnung 40 mit Gurtblockierung 23, 25 auf unterschiedlichen Seiten des Antriebsrades 13 angeordnet sind, wobei das Antriebsrad mit der Innenverzahnung 40 verschachtelt angeordnet ist, um axiale Baulänge einzusparen.

Bei dem in Figur 14c dargestellten Ausführungsbeispiel ist der Aufbau des Gurtaufrollers ähnlich der Darstellung in Figur 14a, wobei das Antriebsrad 13 innenseitig benachbart der Gurtwelle 12 angeordnet und die Verzahnungen 20, 40 nach außen hin aufgebaut sind; hierbei ist ein Blockierwiderlager einbezogen.

Das in Figur 14d dargestellte Ausführungsbeispiel ist ähnlich dem in Figur 14b dargestellten Ausführungsbeispiel aufgebaut, wobei nun das Antriebsrad 13 mit Innenverzahnung 40 und die Außenverzahnung 20 mit Blockierklinke 21 auf unterschiedlichen Seiten des Gehäuseschenkels 11 angeordnet sind, wobei sich das Antriebsrad 13 innenseitig des Gehäuseschenkels 11 befindet. Ein zusätzliches Gehäuseteil 81 als Widerlager für die Sperrklinke 21 ist an dem U-Schenkel 11 des Gehäuses vorgesehen.

Das in Figur 14e dargestellte Ausführungsbeispiel zeigt im wesentlichen eine Umkehrung des in Figur 14d dargestellten Ausführungsbeispiels, wobei jetzt das Antriebsrad 13 außerhalb des Gehäuseschenkels 11 angeordnet und die in einer Ebene liegenden Verzahnungen 40, 20 des Antriebsrades 13 zwischen Gehäuseschenkel 11 und Gurtwelle 12 angeordnet sind.

Das in Figur 14f dargestellte Ausführungsbeispiel entspricht dem zu Figur 14e beschriebenen Ausführungsbeispiel, wobei eine Vertauschung der Konstruktionselemente von innerhalb nach außerhalb vorgenommen ist, indem das Antriebsrad 13 zwischen Gehäuseschenkel 11 und Gurtwelle 12 und die übrigen Elemente außerhalb des Gehäuses 10 angeordnet sind. Die Blockierklinke 21 ist entsprechend Figur 14d wiederum an einem zusätzlichen Gehäuseteile 81 abgestützt.

Das in Figur 14g dargestellte Ausführungsbeispiel entspricht dem in Figur 14e dargestellten Ausführungsbeispiel mit der Maßgabe, daß die Außenverzahnung 20 mit Blockierklinke 21 zwischen dem Gehäuseschenkel 11 und der Gurtwelle 12 angeordnet sind, während das Antriebsrad 13 mit der daran verschachtelt angeordneten Innenverzahnung 40 mit Gurtblockierung 23, 25 außerhalb des Gehäuses 10 angeordnet sind.

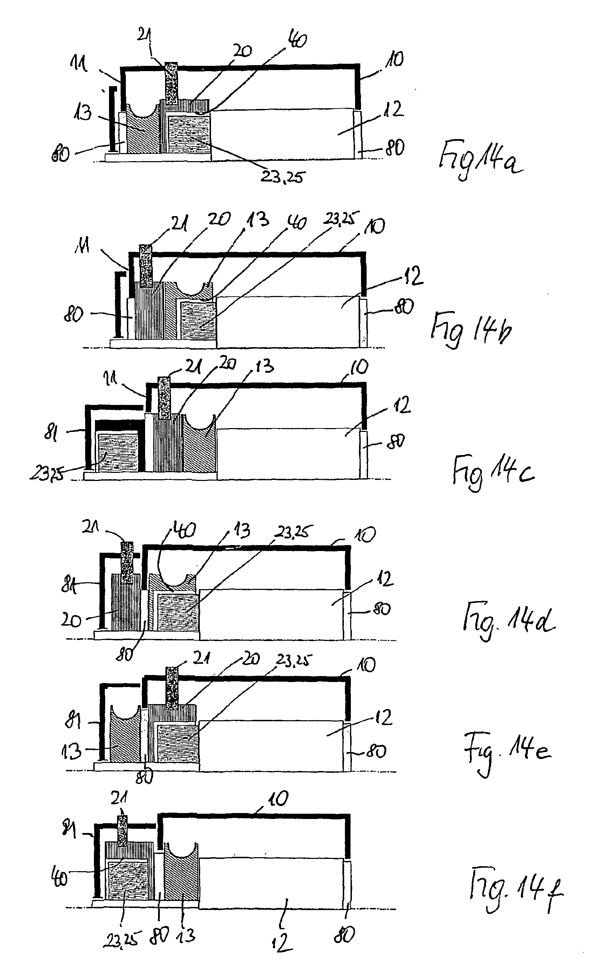

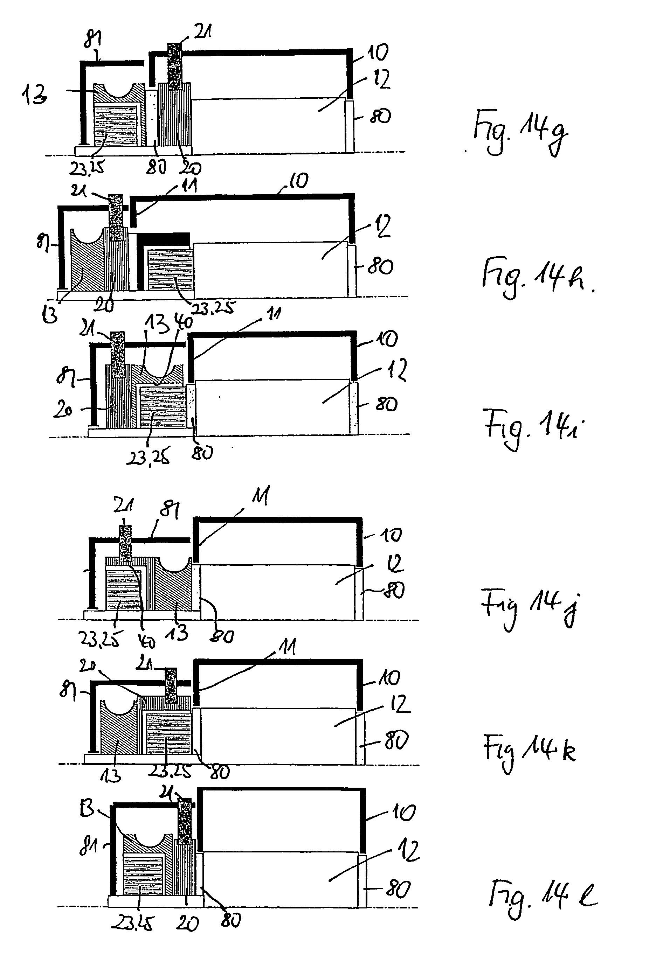

Bei den nachfolgend noch beschriebenen Ausführungsbeispielen gemäß Figuren 14h - 141 ist wie schon bei Figuren 14d und 14f zusätzlich zu dem bisher beschriebenen U-förmigen Gehäuse 10 an einem U-Schenkel 11 des Gehäuses ein zusätzliches Gehäuseteil 81 als Widerlager für die Sperrklinke 21 vorgesehen, so daß jeweils die Sperrklinke 21 an diesem zusätzlichen Gehäuseteil 81 gelagert ist. Hierbei stellt im weiteren das Ausführungsbeispiel gemäß Figur 14h eine Umkehrung der Anordnung gemäß Figur 14c dar, wobei die Gurtblockierung 23, 25 innerhalb des Gehäuses 10 und die übrigen Konstruktionsbestandteile außerhalb des Gehäuses 10 angeordnet sind.

Bei dem in Figur i dargestellten Ausführungsbeispiel ist ein mit dem Ausführungsbeispiel gemäß Figur 14b identischer Aufbau der Konstruktionselemente gewählt, wobei die entsprechenden Elemente Antriebsrad 13 mit den zugehörigen Blockierungen außerhalb des Gehäuses 10 angeordnet sind.

Das in Figur 14j dargestellte Ausführungsbeispiel entspricht wiederum dem den Figur 14a dargestellten Ausführungsbeispiel mit einer seitenverkehrt vorgesehenen Anordnung der Konstruktionselemente, die sämtlich außerhalb des Gehäuses 10 angeordnet sind. Entsprechendes gilt auch für die Ausführungsbeispiele gemäß den Figuren 14k und 141, die analog der vorstehenden Beschreibung ebenfalls alternative Zuordnungen zeigen.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller mit einem Gehäuse (10), mit einer wenigstens ein fahrzeugsensitiv und/oder gurtbandsensitiv in eine gehäuseseitige Blockierverzahnung einsteuerbares Blockiermittel (25) aufweisenden Blockiereinrichtung für die Gurtwelle (12) und mit einer auf die Gurtwelle (12) einwirkenden Strammvorrichtung bestehend aus einem über eine Antriebsvorrichtung (51) in Drehung zu versetzenden Antriebsrad (13), das bei Auslösung der Strammvorrichtung mit der Gurtwelle (12) koppelbar ist, wobei das Antriebsrad (13) der Strammvorrichtung über die Blockiereinrichtung für die Gurtwelle (12) kraftübertragend mit der Gurtwelle (12) verbindbar ist und das Antriebsrad (13) vor Auslösung der Strammvorrichtung kraftübertragend an dem Gehäuse (10) des Gurtaufrollers **dadurch** festgelegt ist, dass das ringförmig ausgebildete Antriebsrad (13) eine Blockierverzahnung (20) zum Eingriff wenigstens einer durch Federkraft nachgiebig in Eingriff mit der Blockierverzahnung (20) stehenden, am Gehäuse (10) gelagerten Blockierklinke (21) aufweist, so dass durch die bei Auslösung der Strammvorrichtung bewirkte Drehung des Antriebsrades (13) in Gurtaufwickelrichtung das Antriebsrad (13) von dem Gehäuse (10) lösbar und in Gurtauszugsrichtung am Gehäuse (10) festgelegt ist, **dadurch gekennzeichnet, dass** zur unmittelbaren Kupplung des Antriebsrades (13) mit der Gurtwelle (12) das Antriebsrad (13) eine zum Eingriff des an der Gurtwelle (12) gelagerten Blockiermittels (25) der Blockiereinrichtung eingerichtete Innenverzahnung (40) aufweist, so dass durch die bei Auslösung der Strammvorrichtung bewirtete Drehung des Antriebrades (13) das Antriebsrad (13) über das Blockiermittel (25) der Blockiereinrichtung kraftübertragend mit der Gurtwelle (12) verbindbar ist.

2. Gurtaufroller nach Anspruch 1, **dadurch gekennzeichnet, dass** die Blockierverzahnung (20) des Antriebsrades (13) und die Blockierklinke (21) derart zueinander ausgerichtet sind, dass eine Drehung des Antriebsrades (13) in Gurtabwickelrichtung stets blockiert und eine Drehung des Antriebsrades (13) in Gurtaufwickelrichtung durch überratschen der Blockierklinke (21) über die Blockierverzahnung (20) des Antriebsrades (13) ermöglicht ist.

3. Gurtaufroller nach Anspruch 1 oder 2, **dadurch gekennzeichnet, dass** die Blockierklinke (21) seitlich neben dem U-Schenkel (11) des Gehäuses (10) angeordnet und an dem U-Schenkel (11) unter Vorspannung durch eine Drehfeder (22) schwenkbar gelagert ist.

4. Gurtaufroller nach Anspruch 1 oder 2, **dadurch gekennzeichnet, dass** die Blockierklinke (21) in der Ebene des U-Schenkels (11) in einer an diesem angeordneten Aussparung (60) angeordnet und in der Aussparung (60) schwenkbar gelagert ist, wobei zwischen der Blockierklinke (21) und dem Rand der Aussparung eine Blattfeder (61) angeordnet ist.

5. Gurtaufroller nach einem der Ansprüche 1 bis 4, **dadurch gekennzeichnet, dass** auf dem Umfang des Antriebsrades (13) mehrere Blockierklinken (21) an dem Gehäuse (10) des Gurtaufrollers gelagert sind.

6. Gurtaufroller nach Anspruch 1 oder 2, **dadurch gekennzeichnet, dass** die als Außenverzahnung ausgebildete Blockierverzahnung (20) und die Innenverzahnung (40) des Antriebsrades (13) in einer Ebene angeordnet sind

7. Gurtaufroller nach Anspruch 6, **dadurch gekennzeichnet, dass** die Außenverzahnung (20) durch Ausformen der Zähne der Innenverzahnung (40) aus dem Ringprofil des Antriebsrades (13) gebildet ist derart, dass Außenverzahnung (20) und Innenverzahnung (40) eine Verzahnung mit einheitlichen Zähnen bilden.

8. Gurtaufroller nach Anspruch 1 oder 2, **dadurch gekennzeichnet, dass** die Blockierverzahnung des Antriebsrades (13) als Innenverzahnung ausgebildet und axial neben der Innenverzahnung (40) an dem Ringprofil des Antriebsrades (13) angeordnet ist, und die gehäusefest gelagerte Blockierklinke (21) zum Eingriff mit der Innen-Blockierverzahnung U-förmig ausgebildet ist.

9. Gurtaufroller nach Anspruch 1, **dadurch gekennzeichnet, dass** das Antriebsrad (13) an dem Gehäuse (10) über unter Last zerstörbare Blockiermittel festgelegt und die Antriebsvorrichtung (51) der Strammvorrichtung derart ausgebildet ist, dass nach Abschluss der Antriebsbewegung eine Rückbewegung der Antriebsvorrichtung (51) in Gurtauszugsrichtung ausgeschlossen ist derart, dass über die blockierte Antriebsvorrichtung (51) das Antriebsrad (13) undrehbar festgelegt ist und als Blockierverzahnung wirkt.

10. Gurtaufroller nach einem der Ansprüche 1 bis 9, **dadurch gekennzeichnet, dass** das Antriebsrad (13) mit seiner Blockierverzahnung (20) auf der Außenseite eines U-Schenkels (11) des Gehäuses (10) des Gurtaufrollers angeordnet und die Blockierklinke (21) auf der Außenseite des U-Schenkels (11) gelagert ist.

11. Gurtaufroller nach einem der Ansprüche 1 bis 9, **dadurch gekennzeichnet, dass** das Antriebsrad (13) mit seinem mit der außerhalb des U-förmigen Gehäuses (10) des Gurtaufrollers angeordneten Antriebsvorrichtung (51) zusammenwirkenden Bereich auf der Außenseite des U-Schenkels (11) angeordnet ist und mit einem die Blockierverzahnung (20) tragenden Fortsatz (17) den U-Schenkel (11) in einer Lageröffnung (52) durchgreift, und die Blockierklinke (21) auf der Innenseite des U-Schenkels (11) gelagert ist.

12. Gurtaufroller nach Anspruch 11, **dadurch gekennzeichnet, dass** der den U-Schenkel (11) des Gehäuses (10) durchgreifende Fortsatz (17) des Antriebsrades (13) das Drehlager für die Drehung des Antriebsrades (13) bildet.

13. Gurtaufroller nach einem der Ansprüche 1 bis 12, mit einer aus einem einerseits mit der Gurtwelle verbundenen und andererseits das Blockiermittel der Blockiereinrichtung tragenden Torsionsstab bestehenden Kraftbegrenzungsvorrichtung, **dadurch gekennzeichnet, dass** der Torsionsstab einen das Blockiermittel (25) tragenden und von der Trägheitsmasse (29) umgriffenen Profilkopf (23) aufweist.

14. Gurtaufroller nach Anspruch 13, **dadurch gekennzeichnet, dass** der Profilkopf (23) mit der Gurtwelle (12) über gesonderte Verbindungsmittel verbunden ist.

## Claims

1. A self stopping seat belt retractor with a housing (10) having a blocking device that includes at least one blocking means (25) for the belt shaft (12) that can be controlled in a vehicle sensitive and/or belt sensitive manner into engagement with a toothed gearing system arranged at the housing, and a tightening device operating on the belt shaft (12) comprising a drive wheel (13) that can be set into rotation via a drive device (51), the drive wheel being connectable upon release of the tightening device with the belt shaft (12), whereby the drive wheel (13) of the tightening device is connectable with the belt shaft (12) via the blocking device for the belt shaft for the transmission of force to the belt shaft and the drive wheel (13) is, prior to the release of the tightening device, secured in a force-transmitting manner on the housing (10) of the seat belt retractor, by that the ringshaped drive wheel (13) comprises a gearing system (20) for engagement with at least one block lever (21) mounted on the housing (10) that is maintained, via yielding under the bias of a spring, in engagement with the gearing system (20), so that the rotation of the drive wheel (13) in the belt unwinding direction that is effected by the release of the tightening device, the drive wheel (13) is releasable from the housing (10) and is secured on the housing (10) in belt winding direction **characterized in that** for direct coupling of the drive wheel (13) with the belt shaft (12) the drive wheel (13) comprises an inner toothed gearing system (40) oriented for engagement by the blocking means (25) of the blocking device secured on the belt shaft (12) so that effected by the rotation of the drive wheel (13) upon release of the tightening device the drive wheel (13) is connectable with the belt shaft (12) in a force-transmitting manner via the blocking means (25) of the blocking device.

2. A seat belt retractor according to claim 1, **characterized in that** the outer toothed gearing system (20) of the drive wheel (13) and the block lever (21) are configured relative to each other such that a rotation of the drive wheel (13) in the belt retracting direction is continuously blocked and a rotation of the drive wheel (13) in the belt unwinding direction is possible through over-ratcheting of the block lever (21) via the blocking toothed gearing system (20) of the drive wheel (13).

3. A seat belt retractor according to claim 1 or 2, **characterized in that** the block lever (21) is arranged adjacent the U-shank (11) of the housing (10) and is pivotably mounted on the U-shank (11) subject to a pretension applied by a rotation spring (22).

4. A seat belt retractor according to claim 1 or 2, **characterized in that** the block lever (21) is arranged in the plane of the U-shank (11) in a recess (60) formed thereon and is pivotably mounted in the recess (60), whereby a leaf spring (61) is arranged between the block lever (21) and the edge of the recess.

5. A seat belt retractor according to one of the claims 1 - 4, **characterized in that** several block levers (21) are mounted on the housing (10) of the seat belt retractor on the circumference of the drive wheel (13).

6. A seat belt retractor according to claim 1 or 2, **characterized in that** the outer toothed gearing system (20) and the inner toothed gearing system (40) of the drive wheel (13) are arranged in a plane.

7. A seat belt retractor according to claim 6, **characterized in that** the outside toothed gearing system (20) is configured via forming of the teeth of the inside toothed gearing system (40) out of the ring profile of the drive wheel (13), in a manner such that the outside toothed gearing system (20) and the inside toothed gearing system (40) form a toothed gearing system with unitary teeth.

8. A seat belt retractor according to claim 1 or 2, **characterized in that** the outside toothed gearing system (20) is configured as an inner toothed gearing system and is arranged axially adjacent to the inner toothed gearing system (40) of the ring profile of the drive wheel (13), and the block lever (21), which is disposed in a secured manner in the housing, is configured in a U-shaped manner for engagement with the inside blocking toothed gearing system.

9. A seat belt retractor according to claim 1, **characterized in that** the drive wheel (13) is secured on the housing (10) via a blocking means that is capable of being destroyed when subject to loading and the drive device (51) of the tightening device is configured such that, after the end of the drive movement, a return movement of the drive device (51) in the belt unwinding direction is foreclosed such that the drive wheel (13) is held in a non-rotating position via the blocked drive device (51) and functions as the blocking toothed gearing system.

10. A seat belt retractor according to one of the claims 1 - 9, **characterized in that** the drive wheel (13) with its blocking toothed gearing system (20) is mounted on the outer side of a U-shank (11) of the housing (10) of the seat belt retractor and the block lever (21) is mounted on the outer side of the shank (11).

11. A seat belt retractor according to one of the claims 1 - 9, **characterized in that** the drive wheel (13) with its region that engages the drive device (51) being arranged outside of the U-shaped housing (10) of the retractor is arranged on the outside of the U-shank (11) and extends through the U-shank (11) via a support opening (52) therein with a projection (17) that supports the outer toothed gearing system (20), and the outer toothed gearing system (20) is mounted on the inner side of the U-shank (11).

12. A seat belt retractor according to claim 11, **characterized in that** the projection (17) extending through the U-shank (11) of the housing (10) forms the rotational support for the rotation of the drive wheel (13).

13. A seat belt retractor according to one of the claims 1 - 12, with a force limiting device in the form of a torsion bar connected, on one side, with the belt shaft and supporting, on the other side, the blocking means of the blocking device, **characterized in that** the torsion bar comprises a profile head (23) that is gripped around by the inertial mass (29) and that supports the blocking means (25).

14. A seat belt retractor according to claim 13, **characterized in that** the profile head (23) is connected with the belt shaft (12) via a special connecting means.

## Revendications

1. Enrouleur de ceinture de sécurité autobloquant comportant un boîtier (10), au moins un dispositif de blocage pour l'arbre d'enroulement de la ceinture (12), lequel dispositif comporte au moins un moyen de blocage (25) qui est sensible au véhicule et/ou sensible à la sangle et peut engrener dans une denture de blocage du côté du boîtier, et un tendeur de ceinture agissant sur l'arbre d'enroulement de la ceinture (12) et formé par une roue d'entraînement (13), qui est destinée à être entraînée en rotation par un dispositif d'entraînement (51) et qui, lors du déclenchement du tendeur de ceinture, peut être- couplée à l'arbre d'enroulement de la ceinture (12), la roue d'entraînement (13) du tendeur de ceinture étant apte à être assemblée, de manière à transmettre les forces, à l'arbre d'enroulement de la ceinture (12) par l'intermédiaire du dispositif de blocage pour l'arbre d'enroulement (12) et, avant le déclenchement du tendeur de ceinture, la roue d'entraînement (13) est fixée contre le boîtier (10) de manière à transmettre les forces, par le fait que la roue d'entraînement (13) annulaire comporte une denture de blocage (20) pour l'engrènement d'au moins un cliquet de blocage (21), monté sur le boîtier (10) et flexiblement en prise avec la denture de blocage (20) sous l'effet de la force d'un ressort, de telle sorte que lors de la rotation de la roue d'entraînement (13) dans le sens d'enroulement de la ceinture, générée par le déclenchement du tendeur de ceinture, la roue d'entraînement (13) peut se désolidariser du boîtier (10) et, lors de la rotation dans le sens de déroulement de la ceinture, ladite roue d'entraînement est fixée contre le boîtier (10), **caractérisé en ce que**, pour un couplage direct de la roue d'entraînement (13) avec l'arbre d'enroulement de la ceinture (12), la roue d'entraînement (13) comporte une denture intérieure (40) conçue pour l'engrènement du moyen de blocage (25) du dispositif de blocage, monté sur l'arbre d'enroulement de la ceinture (12), de telle sorte que, sous l'effet de la rotation de la roue d'entraînement (13) générée par le déclenchement du tendeur de ceinture, la roue d'entraînement (13) peut être assemblée de manière à transmettre les forces avec l'arbre d'enroulement de la ceinture (12) par l'intermédiaire du moyen de blocage (25) du dispositif de blocage.

2. Enrouleur de ceinture de sécurité selon la revendication 1, **caractérisé en ce que** la denture de blocage (20) de la roue d'entraînement (13) et le cliquet de blocage (21) sont orientés l'un vers l'autre de telle sorte qu'une rotation de la roue d'entraînement (13) dans le sens de déroulement de la ceinture est toujours bloquée et une rotation de la roue d'entraînement (13) dans le sens d'enroulement de la ceinture est possible par le glissement du cliquet de blocage (21) sur la denture de blocage (20).

3. Enrouleur de ceinture de sécurité selon la revendication 1 ou 2, **caractérisé en ce que** le cliquet de blocage (21) est agencé latéralement à côté de la paroi en U (11) du boîtier (10) et est monté pivotant sur la paroi en U (11) sous précontrainte par un ressort de torsion (22).

4. Enrouleur de ceinture de sécurité selon la revendication 1 ou 2, **caractérisé en ce que** le cliquet de blocage (21) est agencé dans le plan de la paroi en U (11) dans un évidement (60), réalisé dans celle-ci, et est monté pivotant dans l'évidement (60), un ressort à lame (61) étant agencé entre le cliquet de blocage (21) et le bord de l'évidement.

5. Enrouleur de ceinture de sécurité selon l'une quelconque des revendications 1 à 4, **caractérisé en ce que** plusieurs cliquets de blocage (21), sur le pourtour de la roue d'entraînement (13), sont montés contre le boîtier (10) de l'enrouleur de ceinture.

6. Enrouleur de ceinture de sécurité selon la revendication 1 ou 2, **caractérisé en ce que** la denture de blocage (20), conçue sous forme de denture extérieure, et la denture intérieure (40) de la roue d'entraînement (13) sont agencées dans un même plan.

7. Enrouleur de ceinture de sécurité selon la revendication 6, **caractérisé en ce que** la denture extérieure (20) est formée par le formage des dents de la denture intérieure (40) dans le profil annulaire de la roue d'entraînement (13), de telle sorte que la denture extérieure (20) et la denture intérieure (40) forment une denture avec des dents communes.

8. Enrouleur de ceinture de sécurité selon la revendication 1 ou 2, **caractérisé en ce que** la denture de blocage de la roue d'entraînement (13) est réalisée sous forme de denture intérieure et est agencée axialement à côté de la denture intérieure (40) sur le profil annulaire de la roue d'entraînement (13), et le cliquet de blocage (21), monté fixe contre le boîtier (10), est réalisé en forme de U pour engrener avec la denture de blocage intérieure.

9. Enrouleur de ceinture de sécurité selon la revendication 1, **caractérisé en ce que** la roue d'entraînement (13) est fixée contre le boîtier (10) par l'intermédiaire de moyens de blocage, pouvant être détériorés sous charge, et le dispositif d'entraînement (51) du tendeur de ceinture est réalisé de telle sorte que, à la fin du mouvement d'entraînement, un mouvement de retour du dispositif d'entraînement (51) dans le sens de déroulement de la ceinture est exclu, de telle sorte que, par l'intermédiaire du dispositif d'entraînement (51) bloqué, la roue d'entraînement (13) est fixée de manière immobile en rotation et fait fonction de denture de blocage.

10. Enrouleur de ceinture de sécurité selon l'une quelconque des revendications 1 à 9, **caractérisé en ce que** la roue d'entraînement (13) est agencée avec sa denture de blocage (20) sur le côté extérieur d'une paroi en U (11) du boîtier (10) de l'enrouleur de ceinture et le cliquet de blocage (21) est logé sur le côté extérieur de la paroi en U (11).

11. Enrouleur de ceinture de sécurité selon l'une quelconque des revendications 1 à 9, **caractérisé en ce que** la roue d'entraînement (13) est agencée avec sa zone coopérant avec le dispositif d'entraînement (51), agencé en dehors du boîtier (10) en forme de U de l'enrouleur de ceinture, sur le côté extérieur de la paroi en U (11) et, avec une saillie (17) portant la denture de blocage (20), passe à travers un orifice formant palier (52) dans la paroi en U (11), et le cliquet de blocage (21) est monté sur la face intérieure de la paroi en U (11).

12. Enrouleur de ceinture de sécurité selon la revendication 11, **caractérisé en ce que** la saillie (17) de la roue d'entraînement (13), passant à travers la paroi en U (11) du boîtier (10), forme le palier de rotation pour la rotation de la roue d'entraînement (13).

13. Enrouleur de ceinture de sécurité selon l'une quelconque des revendications 1 à 12, comportant un dispositif de limitation des forces, formé par une barre de torsion qui, sur un côté, est assemblée à l'arbre d'enroulement de la ceinture et, sur l'autre côté, porte le moyen de blocage du dispositif de blocage, **caractérisé en ce que** la barre de torsion comporte une tête profilée (23) qui porte le moyen de blocage (25) et qui est entourée par la masse d'inertie (29).

14. Enrouleur de ceinture de sécurité selon la revendication 13, **caractérisé en ce que** la tête profilée (23) est assemblée à l'arbre d'enroulement de la ceinture (12) par l'intermédiaire de moyens d'assemblage spéciaux.
